# EUROPÄISCHE PATENTSCHRIFT

(11) **EP 1 354 153 B1**
(45) Veröffentlichungstag und Bekanntmachung des Hinweises auf die Patenterteilung: **19.04.2006**
(21) Anmeldenummer: 01991683.2
(22) Anmeldetag: 22.12.2001
(51) Int. Cl.: F16H 61/02, F16D 48/06

(54) **SCHALTABLAUFSTEUERUNG UND VERFAHREN ZUM KOORDINIEREN VON SCHALTUNGSABLÄUFEN**
SHIFTING PROCESS CONTROL AND METHOD FOR COORDINATING SHIFTING PROCESSES
COMMANDE DE PROCESSUS DE CHANGEMENT DE VITESSES ET PROCEDE DE COORDINATION DE PROCESSUS DE CHANGEMENTS DE VITESSES

(30) Priorität: 17.01.2001 DE 10101829
(43) Veröffentlichungstag der Anmeldung: 22.10.2003
(73) Patentinhaber: ROBERT BOSCH GMBH, 70442 Stuttgart (DE)
(72) Erfinder: ECK, Martin, 71282 Hemmingen (DE); ERNST, Tobias, 71334 Waiblingen (DE); MAIENBERG, Uwe, 71229 Leonberg (DE)
(86) Internationale Anmeldenummer: PCT/DE2001/004910
(87) Internationale Veröffentlichungsnummer: WO 2002/057660

(56) Entgegenhaltungen:
- EP-A- 1 065 413
- DE-A- 19 524 412
- DE-A- 19 916 006
- DE-A- 19 937 455
- US-A- 5 948 033

## Beschreibung

Die vorliegende Erfindung betrifft eine Schaltablaufsteuerung zum Koordinieren von Schaltungen, die Wechseln von Konstellationen in einem Getriebe entsprechen, wobei ein Wechsel der Konstellation eine Veränderung der Kraftübertragung des Getriebes ergibt, und wobei der die Ansteuerung einer Vielzahl von Stellgliedern umfassende Ablauf der Schaltungen programmgesteuert erfolgt und in Phasen unterteilt ist, denen jeweils zumindest eine Ansteuerungsart für zumindest ein Stellglied zugeordnet ist. Weiterhin betrifft die vorliegende Erfindung ein Verfahren zum Koordinieren von Schaltungsabläufen, die Wechseln von Konstellationen in einem Getriebe entsprechen, wobei ein Wechsel der Konstellationen eine Veränderung der Kraftübertragung des Getriebes ergibt, bei dem der die Ansteuerung einer Vielzahl von Stellgliedern umfassende Ablauf der Schaltungen programmgesteuert erfolgt und in Phasen unterteilt ist, denen jeweils zumindest eine Ansteuerungsart für zumindest ein Stellglied zugeordnet ist.

### Stand der Technik

Aus der DE 19937455 A1 ist eine gattungsgemäße Vorrichtung und ein gattungsgemäßes Verfahren zur koordinierten Steuerung des Antriebsstrangs eines Kraftfahrzeugs während Getriebeschaltvorgängen bekannt. Diese Druckschrift betrifft die koordinierte Steuerung der im Antriebsstrang eines Kraftfahrzeuges angeordneten Elemente Servokupplung, Fahrzeugmotor und Getriebe während einer Änderung der Getriebeübersetzung. Dabei ist jedem dieser Elemente des Antriebsstrangs eine Treiberstufe zugeordnet, die mit den Koordinationsmitteln verbunden ist. Gemäß der genannten Druckschrift geben die Koordinationsmittel während der Änderung der Getriebeübersetzung der Motortreiberstufe wahlweise entweder Sollwerte zur Einstellung eines Motorausgangsmoments oder eines Kupplungseingangsmoments oder Sollwerte zur Einstellung einer Motorausgangsdrehzahl oder einer Getriebeeingangsdrehzahl vor. Weiterhin werden von den Koordinationsmitteln Sollwerte zur Einstellung einer Getriebeübersetzung an die Getriebetreiberstufe übermittelt. Die DE 19937455 A1 betrifft somit eine Schaltablaufsteuerung für ein automatisiertes Schaltgetriebe, wobei drei Phasen (Momentenreduktion, Gangwechsel, Momentenaufbau) vorgesehen sind, die genau an das automatisierte Schaltgetriebe angepasst sind. Ein Nachteil der bekannten gattungsgemäßen Schaltablaufsteuerung beziehungsweise des bekannten gattungsgemäßen Verfahrens besteht darin, dass diese Schaltablaufsteuerung beziehungsweise dieses Verfahren nicht oder nur mit großem Aufwand an andere Getriebetypen, wie beispielsweise einen Stufenautomat oder ein CVT-Getriebe (continuously variable transmission = kontinuierliche variable Übersetzung) angepasst werden kann.

Aus der DE 195 24 412 A1, die als nächstliegender Stand der Technik betrachtet wird, ist eine Steuereinrichtung zur Regelung des Schließvorganges einer Trennkupplung, zum automatischen Abbau der Drehzahldifferenz zwischen dem abtriebsseitigen Kupplungselement und dem antriebsseitigen Kupplungselement und zur Regelung des Öffnungsvorgangs der Kupplung mit Mitteln zur axialen Verstellung mindestens eines Kupplungselementes bekannt. Die Ansteuerung des Kupplungselementes erfolgt programmgesteuert. Übergänge von einer Konstellation in die nächste sind in Phasen unterteilt, denen wenigstens ein Kriterium zugeordnet ist, dessen Erfüllung zu einem Ende der entsprechenden Phase führt.

### Vorteile der Erfindung

Dadurch, dass gemäß der vorliegenden Erfindung vorgesehen ist, dass die Phasen ohne Veränderung des Programms konfigurierbar sind, kann die erfindungsgemäße Schaltablaufsteuerung für verschiedene Getriebetypen, sowie innerhalb eines Getriebetyps für verschiedene Bauformen verwendet werden. Die Veränderung des Programms erfolgt dabei insbesondere im Rahmen von vorhandenen Funktionen.

Bei der erfindungsgemäßen Schaltablaufsteuerung ist vorgesehen, dass zumindest einigen der Phasen Kriterien zugeordnet sind, deren Erfüllung zu einem Ende der entsprechenden Phase führt. Diese Kriterien, die auch als Trigger-Funktionen bezeichnet werden können, werden projektspezifisch und mit zugehörigen Parameterfunktionen zur Verfügung gestellt, wobei die Kriterien oder Trigger-Funktionen über die Parameterfunktionen bedatet werden. Auf diese Weise hat ein Anwender bei der Definition einer Phase beispielsweise die Möglichkeit, in einer Datentabelle über einen Index jeweils eine oder mehrere Trigger-Funktionen und die entsprechenden Parameterfunktionen auszuwählen. Dadurch wird über die Phasendefinition der gesamte Schaltablauf frei konfigurierbar, ohne dass Programmänderungen erforderlich sind.

Die Kriterien umfassen vorzugsweise Zeitkriterien. Derartige Zeitkriterien können beispielsweise zum Ende einer

Phase führen, wenn eine vorgegebene Zeitspanne überschritten wird. Der Beginn einer vorgegebenen Zeitspanne kann beispielsweise auf den SS-Punkt, den SB-Punkt, den SF-Punkt oder den SE-Punkt gelegt werden. Der SS-Punkt ist der Startpunkt des aktuellen Schaltvorgangs, der als der Punkt definiert werden kann, zu dem entschieden wurde, die aktuelle Schaltart zu starten. Der SB-Punkt ist der Zeitpunkt, zu dem mit der Schaltung begonnen wird, wobei dieser Zeitpunkt als ein Zeitpunkt definiert werden kann, zu dem der Wechsel der Übersetzung beginnt (Verlassen der Synchrondrehzahl) . Der SF-Punkt bezeichnet einen Zeitpunkt, zu dem der nächste Zustand der Übersetzung erreicht wird, das heißt den Synchron-Zeitpunkt. Schließlich bezeichnet der SE-Punkt das Schaltungsende, zu dem die dynamischen Zustände des Getriebes abgeschlossen sind und der nächste statische Zustand des Getriebes ausgewählt werden kann.

Die Zeitkriterien können eine oder mehrere der folgenden gemessenen oder geschätzten Zeiten berücksichtigen: Zeit bis zum Erreichen oder Verlassen einer Synchrondrehzahl, Zeit bis zum Beginn oder Ende einer Schaltungsphase, Zeit bis zum Erreichen oder Verlassen eines vorgegebenen Drucks. Weiterhin ist es denkbar, dass lediglich die Zeit überwacht wird, die seit dem Beginn einer bestimmten Phase verstrichen ist.

Neben den Zeitkriterien umfassen die Kriterien vorzugsweise weiterhin Ereigniskriterien. Ein derartiges Ereigniskriterium ist in der Regel erfüllt, wenn eine entsprechend überwachte physikalische Größe einen vorgegebenen Wert erreicht. Dabei kommt nicht nur die Überwachung des Getriebes selbst sondern auch die Überwachung von Größen in Betracht, die beliebige weitere Fahrzeugkomponenten betreffen.

Die Ereigniskriterien können beispielsweise eine oder mehrere der folgenden Größen und/oder deren zeitliche Ableitungen berücksichtigen: Motordrehzahl, Übersetzungsverhältnis, Synchrondrehzahlen, Schubkräfte, Beschleunigungsmomente, Gaspedalstellung, Turbinendrehzahl, Abtriebsdrehzahl und so weiter. In diesem Zusammenhang kann es ebenfalls vorteilhaft sein, Zeitkriterien und Ereigniskriterien in geeigneter Weise zu kombinieren.

Die während der Phasen angesteuerten Stellglieder können beispielsweise Druckreglerventile und/oder Magnetventile und/oder Schrittmotoren und/oder Verbrennungsmotor-Steuerungsmittel umfassen. Bei einigen Stellgliedern kann vorgesehen sein, dass sie Rückmeldungen liefern, die der Erfüllung eines Kriteriums entsprechen können, so dass eine derartige Rückmeldung beispielsweise den Wechsel einer Phase verursachen kann. Beispielsweise ist bei einigen Stufenautomaten mit Bremsbändern ein Schalter vorgesehen, der die Schwarz-Weiß-Stellung Bremsbandanliegend oder Bremsband-nicht-anliegend erfasst und eine entsprechende Rückmeldung liefert.

Bei der erfindungsgemäßen Schaltablaufsteuerung ist vorzugsweise vorgesehen, dass zumindest einigen der Phasen und/oder einigen der Kriterien wenigstens eine Folgephase zugeordnet ist, die beim Ende der Phase beziehungsweise bei der Erfüllung eines Kriteriums durchlaufen wird. Auf diese Weise kann je nach Betriebszustand zu einer passenden Phase verzweigt werden.

Bei der erfindungsgemäßen Schaltablaufsteuerung erfolgt die Konfiguration der Phasen vorzugsweise durch Daten, die Ansteuerungsarten und/oder die Kriterien und/oder die Folgephasen definieren. In diesem Zusammenhang ist vorzugsweise weiterhin vorgesehen, dass die Daten zumindest an verschiedene Getriebearten, Getriebetypen und Getriebebaureihen anpassbar sind.

Die Daten können dabei beispielsweise in Form von Tabellen vorgesehen sein, die eine Änderung der Phasensteuerung ohne Programmänderung ermöglichen.

Bei der erfindungsgemäßen Schaltablaufsteuerung kann weiterhin vorgesehen sein, dass Zustandsgrößen erfasst werden, und dass an Hand dieser Zustandsgrößen eine Schaltstrategie ausgewählt wird, der vorherbestimmte Phasen zugeordnet sind. In diesem Zusammenhang ist es beispielsweise möglich, den Fahrstil eines Fahrers zu erfassen und eine an diesen Fahrstil angepasste Schaltstrategie zuzuordnen.

Die Zustandsgrößen können beispielsweise den aktuellen Gang, und/oder den Zielgang (der beispielsweise über den Fahrerwunsch ermittelt werden kann) und/oder die Fahrzeuggeschwindigkeit und/oder das Motormoment umfassen.

Um die erfindungsgemäße Schaltablaufsteuerung in einfacher Weise an verschiedene Getriebetypen und -baureihen anpassen zu können ist vorzugsweise vorgesehen, dass auch die Schaltstrategien ohne Veränderung des Programms im Rahmen der zur Verfügung stehenden Funktionen konfigurierbar sind.

Zu diesem Zweck definieren die Daten vorzugsweise weiterhin Zuordnungen von Phasen zu Schaltstrategien. Auch in diesem Zusammenhang ist es möglich, die Daten in Form von Tabellen vorzusehen.

Zumindest eines der Stellglieder kann ein aktives Stellglied sein, das das Ende einer Phase fordern kann. Unter "fordern" ist in diesem Zusammenhang zu verstehen, dass ein entsprechendes Signal eines Stellgliedes nicht zwingend zum Ende einer Phase führen muss, sondern dass dieses Ende der Phase von weiteren Kriterien abhängig ist.

Dadurch, dass bei dem erfindungsgemäßen Verfahren zum Koordinieren von Schaltungsabläufen vorgesehen ist, dass die Phasen durch Daten definiert sind, die ohne Veränderung des Programms veränderbar sind, wird ein Verfahren bereitgestellt, das in einfacher Weise an unterschiedliche Getriebetypen und -baureihen anpassbar ist.

Bei dem erfindungsgemäßen Verfahren ist vorzugsweise vorgesehen, dass zumindest einigen der Phasen über die Daten Kriterien zugeordnet sind, deren Erfüllung zu einem Ende der entsprechenden Phase führt. Auch bei dem erfindungsgemäßen Verfahren können die Kriterien oder Trigger-Funktionen projektspezifisch und mit zugehörigen Parameterfunktionen zur Verfügung gestellt werden. Auf die entsprechenden Ausführungen im Zusammenhang mit der erfindungsgemäßen Schaltablaufsteuerung wird verwiesen.

Auch in diesem Zusammenhang umfassen Kriterien vorzugsweise Zeitkriterien. Der Beginn der durch die Zeitkriterien festgelegten Zeitspannen kann auch hier mit dem SS-Punkt, dem SB-Punkt, dem SF-Punkt, oder dem SE-Punkt zusammenfallen, die bereits erläutert wurden.

Wie bei der erfindungsgemäßen Schaltablaufsteuerung können die Zeitkriterien auch bei dem erfindungsgemäßen Verfahren eine oder mehrere der folgenden gemessenen oder geschätzten Zeiten berücksichtigen: Zeit bis zum Erreichen oder Verlassen einer Synchrondrehzahl, Zeit bis zum Beginn oder Ende einer Schaltphase, Zeit bis zum Erreichen oder Verlassen eines vorgegebenen Drucks, wobei diesbezüglich auf die vorstehenden Erläuterungen im Zusammenhang mit der Schaltablaufsteuerung verwiesen wird.

Auch bei dem erfindungsgemäßen Verfahren umfassen die Kriterien vorzugsweise Ereigniskriterien.

Ebenso wie bei der erfindungsgemäßen Schaltablaufsteuerung können diese beispielsweise durch eine oder mehrere der folgenden Größen und/oder deren zeitliche Ableitungen gebildet sein: Motordrehzahl, Übersetzungsverhältnis, Synchrondrehzahlen, Schubkräfte, Beschleunigungsmomente, Gaspedalstellung, Turbinendrehzahl, Abtriebsdrehzahl.

Die erfindungsgemäß vorgesehenen Daten umfassen vorzugsweise Ansteuerungsdaten für Stellglieder, die durch Druckreglerventile und/oder Magnetventile und/oder Schrittmotoren und/oder Verbrennungsmotor-Steuerungsmittel gebildet sein können. Auch im Zusammenhang mit dem erfindungsgemäßen Verfahren kann es vorteilhaft sein, die Daten in Form von entsprechenden Tabellen vorzusehen.

Zumindest einigen der Phasen und/oder einigen der Kriterien ist über die Daten vorzugsweise wenigstens eine Folgephase zugeordnet, die beim Ende der Phase beziehungsweise bei der Erfüllung eines Kriteriums durchlaufen wird. Auf diese Weise kann das erfindungsgemäße Verfahren zu jeweils passenden Phasen verzweigen.

Um eine möglichst universelle Einsetzbarkeit des erfindungsgemäßen Verfahrens zu ermöglichen, sind die Daten vorzugsweise in einfacher Weise an verschiedene Getriebearten, Getriebetypen und Getriebebaureihen anpassbar. Die entsprechend angepassten Daten werden vorzugsweise über geeignete Speichermedien zur Verfügung gestellt.

Ebenso wie bei der erfindungsgemäßen Schaltablaufsteuerung können auch bei dem erfindungsgemäßen Verfahren Zustandsgrößen erfasst werden, und an Hand dieser Zustandsgrößen kann eine Schaltstrategie ausgewählt werden, der vorherbestimmte Phasen zugeordnet sind. Auch hier können die Zustandsgrößen den aktuellen Gang und/oder den Zielgang und/oder die Fahrzeuggeschwindigkeit und/oder das Motormoment umfassen. Die Schaltstrategien sind vorzugsweise ohne Veränderungen des Programms über die Daten konfigurierbar und die Daten definieren die Zuordnung von Phasen zu Schaltstrategien. Zur Vermeidung von Wiederholungen wird diesbezüglich auf die entsprechenden Erläuterungen im Zusammenhang mit der erfindungsgemäßen Schaltablaufsteuerung verwiesen.

### Zeichnungen

Die Erfindung wird nachfolgend an Hand der zugehörigen Zeichnungen näher erläutert.

Es zeigen:
- Figur 1: das Zusammenwirken einer Ausführungsform der erfindungsgemäßen Schaltablaufsteuerung mit Motoreingriffsmitteln, einer Ansteuerung für die Druckreglerventile und einer Magnetventilansteuerung;
- Figur 2: ein Flussdiagramm, das den Wechsel einer Phase in Abhängigkeit von der Erfüllung eines Kriteriums veranschaulicht;
- Figur 3: ein Flussdiagramm, das den Wechsel einer Phase in Abhängigkeit von Zeitkriterien und Ereigniskriterien veranschaulicht;
- Figur 4: ein Beispiel für die Definition von Phasen für den Vorgang des Heraufschaltens;
- Figur 5: ein Beispiel des Drehzahlverlaufs für einen Zug-Heraufschaltvorgang, bei dem vom zweiten Gang in den dritten Gang heraufgeschaltet wird, mit einer Phasendefinition gemäß Figur 4;
- Figur 6: ein Beispiel für die Definition von Phasen für den Vorgang des Herunterschaltens;
- Figur 7: ein Beispiel des Drehzahlverlaufs für einen Zug-Herunterschaltvorgang, bei dem vom vierten Gang in den zweiten Gang heruntergeschaltet wird, bei einer Phasendefinition gemäß Figur 6;
- Figur 8: ein Beispiel für die Definition von Phasen für einen Eingriffsvorgang bei einer Schaltung von N nach Dx oder von N nach R; und
- Figur 9: ein weiteres Beispiel für die Definition von Phasen für einen Eingriffsvorgang bei einer Schaltung von R nach D oder von D nach R.

### Beschreibung der Ausführungsbeispiele

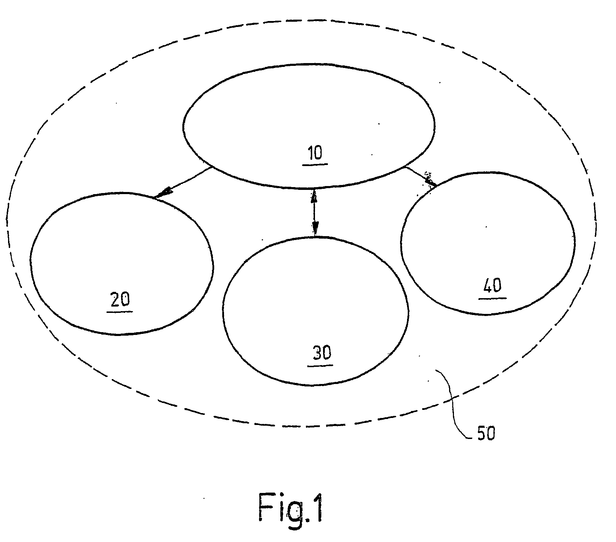

Figur 1 zeigt das Zusammenwirken einer Ausführungsform der erfindungsgemäßen Schaltablaufsteuerung mit Motoreingriffsmitteln, einer Ansteuerung für die Druckreglerventile und einer Magnetventilansteuerung.

Dabei werden folgende Bezugszeichen verwendet:
- 10: Schaltablaufsteuerung
- 20: Motoreingriffsmittel
- 30: Ansteuerung Druckreglerventil
- 40: Magnetventilansteuerung
- 50: Getriebe

Bei dieser Ausführungsform liegen die Komponenten eines Stellgliedes auf der gleichen strukturellen Ebene. Wie in Figur 1 durch den Doppelpfeil angedeutet, sind auch sogenannte aktive Stellglieder in Form der Ansteuerung der Druckreglerventile vorgesehen. Diese aktiven Stellglieder greifen aktiv in die Schaltablaufsteuerung ein. Sie fordern, abhängig von ihrem Zustand, die Weiterschaltung der Phase. Gemäß der Darstellung ist die Schaltablaufsteuerung auf Grund ihrer engen Verflechtung in die Komponente "Getriebe" integriert. Gleiches gilt für die Motoreingriffsmittel, die beispielsweise für eine Momentenforderung zuständig sind, und die Magnetventilansteuerung. Beispielsweise bei einem Stufenautomat ist der Momenteingriff eng mit der Drucksteuerung verbunden und dient zur Unterstützung der Druckreglerventile. Die in Figur 1 dargestellte Struktur ermöglicht ebenso einen unabhängigen Momenteneingriff, wie er beispielsweise bei einem automatisierten Schaltgetriebe erforderlich sein kann.

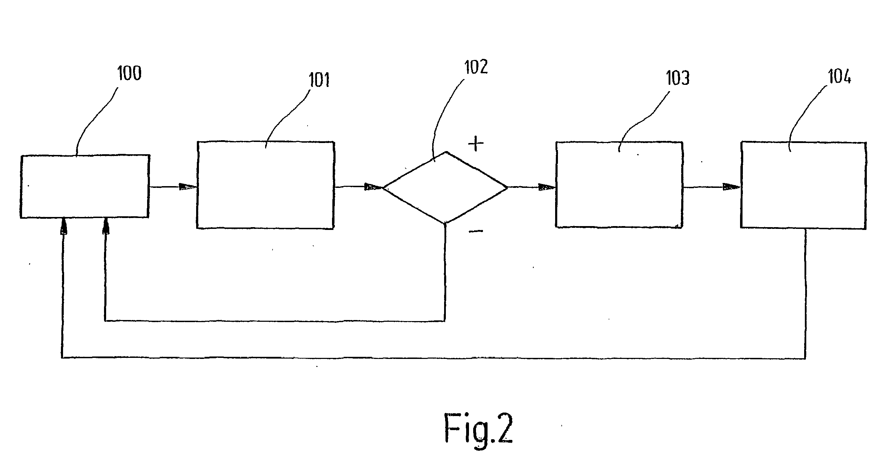

Figur 2 zeigt ein Flussdiagramm, das den Wechsel einer Phase in Abhängigkeit von der Erfüllung eines Kriteriums veranschaulicht.

Dabei sind den Blöcken die folgenden Inhalte zuzuordnen:
- Block 100:: Normaler Betrieb in Phase x.
- Block 101:: Wähle Kriterium aus.
- Block 102:: Kriterium erfüllt.
- Block 103:: Informiere alle Komponenten über Phasenänderung.
- Block 104:: Gehe zu Folgephase

Im Block 100 findet der normale Betrieb in einer Phase x statt, die beispielsweise durch eine der später noch näher erläuterten Phasen 0, 1, 2, 3, 4, 5, 6 oder 7 gebildet sein kann, die später noch näher erläutert werden (selbstverständlich kann in der Praxis auch eine andere Anzahl von Phasen verwendet werden). Ausgehend von diesem Block 100 gelangt man zum Block 101, indem ein Kriterium ausgewählt wird. Dieses Kriterium kann beispielsweise durch ein geeignetes Zeitkriterium und/oder ein geeignetes Ereigniskriterium gebildet sein. Im Block 102 wird überprüft, ob das im Block 101 ausgewählte Kriterium erfüllt ist beziehungsweise wird oder nicht. Sofern im Block 102 festgestellt wird, dass das Kriterium erfüllt ist, werden über den Block 103 alle beteiligten Komponenten darüber informiert, dass eine Phasenänderung bevorsteht. Anschließend wird im Block 104 der Wechsel zu einer geeigneten Folgephase ausgelöst, die dann im Block 100 den Normalbetrieb bildet. Wenn im Block 102 festgestellt wird, dass das Kriterium nicht erfüllt wird, wird direkt zum Block 100 zurückgekehrt, ohne dass ein Wechsel zu einer Folgephase ausgelöst wird.

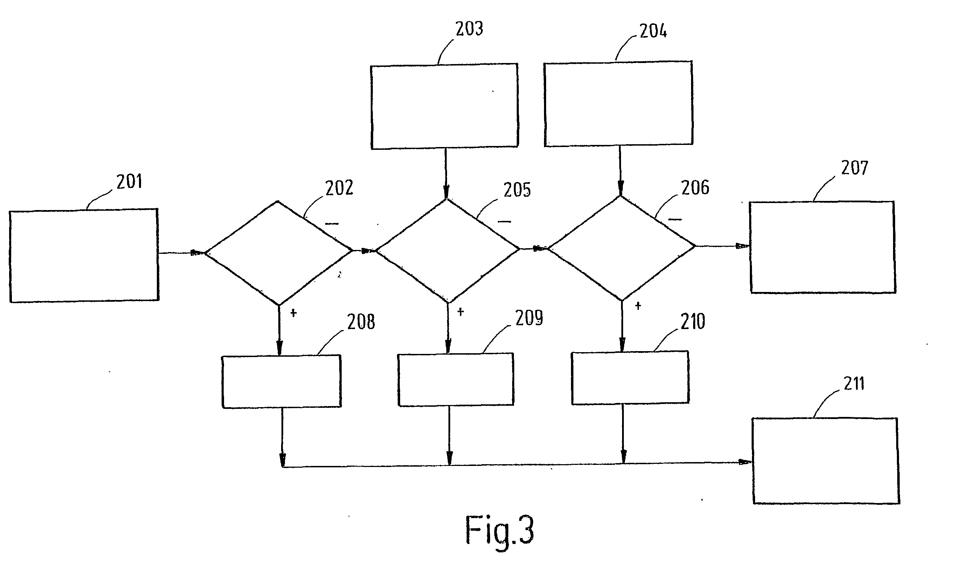

Figur 3 zeigt ein Flussdiagramm, das den Wechsel einer Phase in Abhängigkeit von Zeitkriterien und Ereigniskriterien veranschaulicht.

Dabei sind den Blöcken die folgenden Inhalte zuzuordnen:
- Block 201:: Bestimme Zeitkriterium.
- Block 202:: Zeitkriterium erfüllt?
- Block 203:: Bestimme Ereigniskriterium.
- Block 204:: Bestimme Zusatzkriterium.
- Block 205:: Ereigniskriterium erfüllt?
- Block 206:: Zusatzkriterium erfüllt?
- Block 207:: Bleibe in aktueller Phase.
- Block 208:: Kriterium = 2.
- Block 209:: Kriterium = 3.
- Block 210:: Kriterium = 4.
- Block 211:: Gehe zu Folgephase.

Im Block 201 wird ein Zeitkriterium bestimmt. Dieses Zeitkriterium kann beispielsweise die Zeit bis zum Erreichen oder Verlassen einer Synchrondrehzahl, die Zeit bis zum Beginn oder Ende einer Schubphase, die Zeit bis zum Erreichen oder Verlassen eines vorgegebenen Drucks oder die für eine bestimmte Phase vorgesehene Zeit festlegen. Im Block 202 wird überprüft, ob das in Block 201 bestimmte Zeitkriterium erfüllt ist oder nicht. Ist das Zeitkriterium nicht erfüllt, so wird zum Block 205 verzweigt, indem ein Ereigniskriterium überprüft wird, das in einem Block 203 festgelegt wurde. Das im Block 203 festgelegte Ereigniskriterium kann beispielsweise die Motordrehzahl, das Übersetzungsverhältnis, Synchrondrehzahlen, Schubkräfte, Beschleunigungsmomente oder die Gaspedalstellung betreffen. Wenn im Block 205 festgestellt wird, dass das im Block 203 bestimmte Ereigniskriterium nicht erfüllt ist, wird zu einem Block 206 verzweigt, in dem überprüft wird, ob ein in einem Block 204 bestimmtes Zusatzkriterium erfüllt ist, das bei einigen Getriebetypen erforderlich sein kann. Unter Zusatzkriterien versteht man dabei zum Beispiel getriebespezifische Sensoren. Ein derartiger Sensor kann beispielsweise das Rückmeldesignal eines Bremsbandes liefern. Wenn im Block 206 festgestellt wird, dass auch das Zusatzkriterium nicht erfüllt ist, wird zum Block 207 verzweigt, der festlegt, dass die aktuelle Phase beibehalten wird. Wenn im Block 202 festgestellt wird, dass das Zeitkriterium erfüllt ist, wird in einem Block 208 eine Variable KRITERIUM auf 2 gesetzt und dann zum Block 211 verzweigt, der besagt, dass zu einer Folgephase zu wechseln ist. Wenn im Block 205 festgestellt wird, dass das Ereigniskriterium erfüllt ist, wird die Variable KRITERIUM im Block 209 auf 3 gesetzt und dann zum Block 211 verzweigt. Entsprechend wird die Variable KRITERIUM in einem Block 210 auf 4 gesetzt und zum Block 211 verzweigt, wenn im Block 206 festgestellt wird, dass das Zusatzkriterium erfüllt ist.

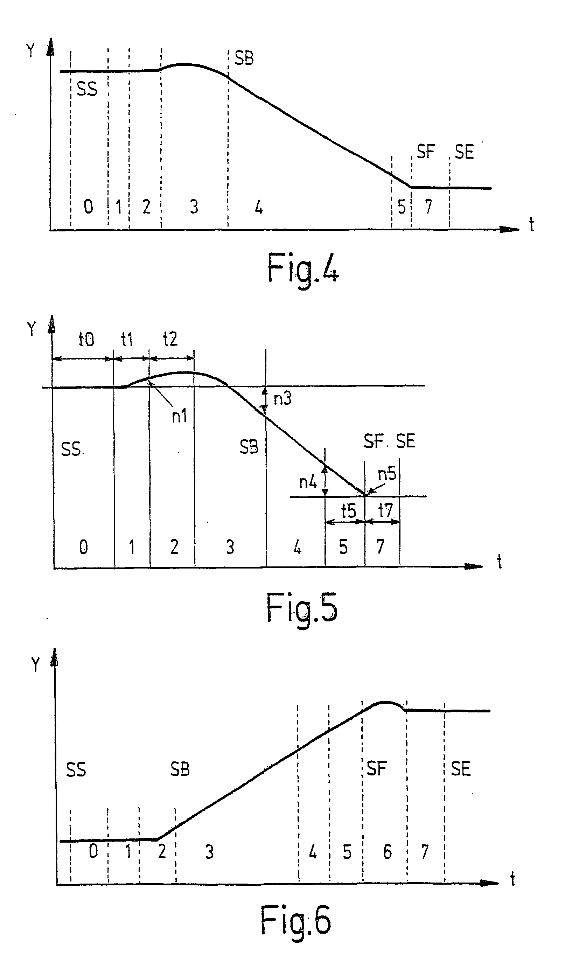

In den Figuren 4 bis 9 werden die folgenden Abkürzungen beziehungsweise Bezeichnungen verwendet:
- SS: Startpunkt des aktuellen Schaltvorgangs, der als der Punkt definiert ist, zu dem entschieden wurde, die aktuelle Schaltart zu starten.
- SB: Zeitpunkt, zu dem mit der Schaltung begonnen wird,
wobei dieser Zeitpunkt als ein Zeitpunkt definiert ist, zu dem der Wechsel der Übersetzung beginnt (Verlassen der Synchrondrehzahl).
- SF: Zeitpunkt, zu dem der nächste Zustand der Übersetzung erreicht wird, das heißt den Synchron-Zeitpunkt.
- SE: den Zeitpunkt des Schaltungsendes, zu dem die dynamischen Zustände des Getriebes abgeschlossen sind und der nächste statische Zustand des Getriebes ausgewählt werden kann.

Figur 4 zeigt ein Beispiel einer möglichen Phasendefinition für den Vorgang des Heraufschaltens, wobei sich aus der folgenden Tabelle I eine Kurzbeschreibung der entsprechenden Phasen sowie das jeweilige normale Endkriterium ergibt. Der dabei verwendete Begriff "Blow Up" bezeichnet eine unerwünschten Zustand im Getriebe, bei dem die Druckverhältnisse nicht optimal sind. Dieser Zustand wird auch als "aufreißen des Getriebes" bezeichnet. Weiterhin bezeichnet die Turbinendrehzahl die Drehzahl am Getriebeeingang (gegebenenfalls nach einem Wandler).

**Tabelle I**

| Phase | Beschreibung | Normales Endkriterium |
|---|---|---|
| 0 | Füllungsphase, in der Kupplungen gefüllt oder gelöst werden | in der Regel Zeitkriterien |
| 1 | Entspannungsphase | Zeitkriterien oder Ereigniskriterien der Drucksteuerung |
| 2 | Warten auf erste Reaktion | Blow Up |
| 3 | Warten auf Schaltbeginn | Synchrondrehzahl wird verlassen |
| 4 | Schaltvorgang läuft | Bestimmter Abstand von der Synchrondrehzahl wird erreicht (entweder geschätztes Zeitkriterium oder Turbinendrehzahkriterium) |
| 5 | Vorbereitungsphase vor dem Erreichen der Synchrondrehzahl | Synchrondrehzahl wird erreicht |
| 6 | Hier nicht verwendet | |
| 7 | Steuerung nach dem Erreichen der Synchrondrehzahl | Schaltvorgang ist abgeschlossen |

Figur 5 zeigt ein Beispiel des Drehzahlverlaufs für einen Zug-Heraufschaltvorgang, bei dem vom zweiten Gang in den dritten Gang heraufgeschaltet wird, für eine Phasendefinition gemäß Figur 4 beziehungsweise Tabelle I. In Figur 5 sind die absoluten. Drehzahlen mit nᵢ gekennzeichnet, während die Zeitintervalle mit tᵢ bezeichnet sind. Für den in Figur 5 dargestellten Drehzahlverlauf gelten diesbezüglich die folgenden Werte: t₀ = 80 ms, t₁ = 120 ms, t₂ = 150 ms, t₅ = 100 ms, t₇ = 100 ms, n₁ = 20 1/min, n₃ = 20 1/min, n₄ = 100 1/min, n₅ = 0 1/min.

Figur 6 zeigt ein Beispiel einer möglichen Phasendefinition für den Vorgang des Herunterschaltens, wobei sich aus der folgenden Tabelle II eine Kurzbeschreibung der entsprechenen Phasen sowie das jeweilige normale Endkriterium ergibt.

**Tabelle II**

| Phase | Beschreibung | Normales Endkriterium |
|---|---|---|
| 0 | Füllungsphase, in der Kupplungen gefüllt oder gelöst werden | in der Regel Zeitkriterien |
| 1 | Entspannungsphase | Zeitkriterien oder Ereigniskriterien der Drucksteuerung |
| 2 | Warten auf Schaltbeginn | Synchrondrehzahl wird verlassen |
| 3 | Schaltvorgang läuft | Bestimmter Abstand von der Synchrondrehzahl wird erreicht (entweder geschätztes Zeitkriterium oder Turbinendrehzahlkriterium) |
| 4 | Schaltvorgang läuft | Bestimmter Abstand von der Synchrondrehzahl wird erreicht (entweder geschätztes Zeitkriterium oder Turbinendrehzahlkriterium) |
| 5 | Vorbereitungsphase vor dem Erreichen der Synchrondrehzahl | Synchrondrehzahl wird erreicht |
| 6 | Phase für Drehzahlüberschwinger | Ende der Phase für Drehzahlüberschwinger, Zeitkriterien |
| 7 | Steuerung nach dem Erreichen der Synchrondrehzahl | Schaltvorgang ist abgeschlossen |

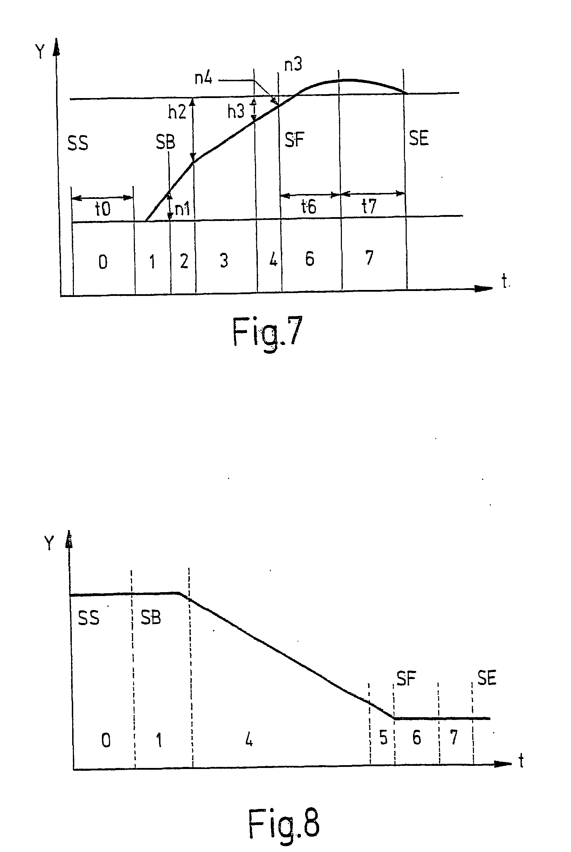

Figur 7 zeigt ein Beispiel des Drehzahlverlaufs für einen Zug-Herunterschaltvorgang, bei dem vom vierten Gang in den zweiten Gang heruntergeschaltet wird, für eine Phasendefinition gemäß Figur 6 beziehungsweise Tabelle II.

In Figur 7 sind die Drehzahlschwellen wieder mit nᵢ gekennzeichnet, die Zeitintervalle sind mit tᵢ bezeichnet und die Verhältnisse von Startdrehzahl zu Zieldrehzahl sind mit hᵢ bezeichnet. Für den in Figur 7 dargestellten Drehzahlverlauf gelten diesbezüglich die folgenden Werte: t₀ = 60 ms, t₆ = 100 ms, t₇ = 100 ms, n₁ = 25 1/min, n₄ = 20 1/min, h₂ = 70 % und h₃ = 20 %.

Figur 8 zeigt ein Beispiel für die Definition von Phasen für einen Eingriffsvorgang bei einer Schaltung von N (Neutral) nach Dₓ (Drive beziehungsweise Fahrt) oder von N (Neutral) nach R (Rückwärts).

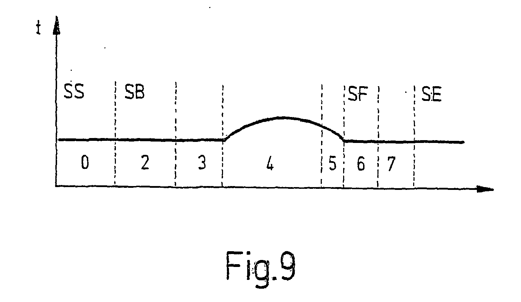

Figur 9 zeigt ein weiteres Beispiel für die Definition von Phasen für einen Eingriffvorgang bei einer Schaltung von R (Rückwärts) nach D (Drive beziehungsweise Fahrt) oder von D (Drive beziehungsweise Fahrt) nach R (Rückwärts).

Die vorgehende Beschreibung der Ausführungsbeispiele gemäß der vorliegenden Erfindung dient nur zu illustrativen Zwecken. Im Rahmen der Erfindung sind verschiedene Änderungen und Modifikationen möglich, ohne den Umfang der Erfindung sowie ihre Äquvalente zu verlassen.

Die Erfindung ist nur durch die beigefügten Ansprüche definiert.

## Patentansprüche

1. Schaltablaufsteuerung zum Koordinieren von Schaltungen, die Wechseln von Konstellationen in einem Getriebe entsprechen, wobei ein Wechsel der Konstellationen eine Veränderung der Kraftübertragung des Getriebes ergibt, und wobei der die Ansteuerung einer Vielzahl von Stellgliedern umfassende Ablauf der Schaltungen durch ein Programm gesteuert erfolgt und in Phasen (0, 1, 2, 4, 5, 6, 7) unterteilt ist, denen jeweils zumindest eine Ansteuerungsart für zumindest ein Stellglied zugeordnet ist, wobei zumindest einigen der Phasen wenigstens ein Kriterium zugeordnet ist, dessen Erfüllung zu einem Ende der entsprechenden Phase führt, **dadurch gekennzeichnet, dass** die Phasen (0, 1, 2, 3, 4, 5, 6, 7) ohne Veränderung des Programms durch Zuordnung eines Kriteriums oder mehrerer Kriterien zu einer Phase konfigurierbar sind.

2. Schaltablaufsteuerung nach einem der vorhergehenden Ansprüche, **dadurch gekennzeichnet, dass** die Kriterien Zeitkriterien umfassen.

3. Schaltablaufsteuerung nach einem der vorhergehenden Ansprüche, **dadurch gekennzeichnet, dass** die Zeitkriterien eine oder mehrere der folgenden gemessenen oder geschätzten Zeiten berücksichtigen: Zeit bis zum Erreichen oder Verlassen einer Synchrondrehzahl, Zeit bis zum Beginn oder Ende einer Schaltungsphase, Zeit bis zum Erreichen oder Verlassen eines vorgegebenen Drucks.

4. Schaltablaufsteuerung nach einem der vorhergehenden Ansprüche, **dadurch gekennzeichnet, dass** die Kriterien Ereigniskriterien umfassen.

5. Schaltablaufsteuerung nach einem der vorhergehenden Ansprüche, **dadurch gekennzeichnet, dass** die Ereigniskriterien eine oder mehrere der folgenden Größen und/oder deren zeitliche Ableitungen berücksichtigen: Motordrehzahl, Übersetzungsverhältnis, Synchrondrehzahlen, Schubkräfte, Beschleunigungsmomente, Gaspedalstellung, Turbinendrehzahl, Abtriebsdrehzahl.

6. Schaltablaufsteuerung nach einem der vorhergehenden Ansprüche, **dadurch gekennzeichnet, dass** Stellglieder Druckreglerventile und/oder Magnetventile und/oder Schrittmotoren und/oder Verbrennungsmotor-Steuerungsmittel umfassen.

7. Schaltablaufsteuerung nach einem der vorhergehenden Ansprüche, **dadurch gekennzeichnet, dass** zumindest einigen der Phasen und/oder einigen der Kriterien (0, 1, 2, 3, 4, 5, 6, 7) wenigstens eine Folgephase (0, 1, 2, 3, 4, 5, 6, 7) zugeordnet ist, die beim Ende der Phase (0, 1, 2, 3, 4, 5, 6, 7) beziehungsweise bei der Erfüllung eines Kriteriums durchlaufen wird.

8. Schaltablaufsteuerung nach einem der vorhergehenden Ansprüche, **dadurch gekennzeichnet, dass** die Konfiguration der Phasen (0, 1, 2, 3, 4, 5, 6, 7) durch Daten erfolgt, die Ansteuerungsarten und/oder die Kriterien und/oder die Folgephasen im Rahmen von vorhandenen Funktionen definieren, und dass die Daten zumindest an verschiedene Getriebearten, Getriebetypen und Getriebebaureihen anpassbar sind.

9. Schaltablaufsteuerung nach einem der vorhergehenden Ansprüche, **dadurch gekennzeichnet, dass** Zustandsgrößen erfasst werden, und dass an Hand dieser Zustandsgrößen eine Schaltstrategie ausgewählt wird, der vorherbestimmte Phasen (0, 1, 2, 3, 4, 5, 6, 7) zugeordnet sind.

10. Schaltablaufsteuerung nach einem der vorhergehenden Ansprüche, **dadurch gekennzeichnet, dass** die Zustandsgrößen den aktuellen Gang und/oder den Zielgang und/oder die Fahrzeuggeschwindigkeit und/oder das Motormoment umfassen.

11. Schaltablaufsteuerung nach einem der vorhergehenden Ansprüche, **dadurch gekennzeichnet, dass** die Schaltstrategien ohne Veränderung des Programms konfigurierbar sind.

12. Schaltablaufsteuerung nach einem der vorhergehenden Ansprüche, **dadurch gekennzeichnet, dass** die Daten die Zuordnungen von Phasen (0, 1, 2, 3, 4, 5, 6, 7) zu Schaltstrategien definieren.

13. Schaltablaufsteuerung nach einem der vorhergehenden Ansprüche, **dadurch gekennzeichnet, dass** zumindest ein Stellglied ein aktives Stellglied ist, das das Ende einer Phase (0, 1, 2, 3, 4, 5, 6, 7) beantragen kann.

14. Verfahren zum Koordinieren von Schaltungsabläufen, die Wechseln von Konstellationen in einem Getriebe entsprechen, wobei ein Wechsel der Konstellationen eine Veränderung der Kraftübertragung des Getriebes ergibt, und wobei der die Ansteuerung einer Vielzahl von Stellgliedern umfassende Ablauf der Schaltungen durch ein Programm gesteuert erfolgt und in Phasen (0, 1, 2, 3, 4, 5, 6, 7) unterteilt ist, denen jeweils zumindest eine Ansteuerungsart für zumindest ein Stellglied zugeordnet ist, wobei zumindest einigen der Phase wenigstens ein Kriterium zugeordnet ist, dessen Erfüllung zu einem Ende der entsprechenden Phase führt, **dadurch gekennzeichnet, dass** die Phasen (0, 1, 2, 3, 4, 5, 6, 7) durch Daten definiert sind und über die Daten ohne Veränderung des Programms durch Zuordnung eines Kriteriums oder mehrerer Kriterien zu einer Phase konfigurierbar sind.

15. Verfahren nach Anspruch 14, **dadurch gekennzeichnet, dass** zumindest einigen der Phasen (0, 1, 2, 3, 4, 5, 6, 7) über die Daten Kriterien zugeordnet sind, deren Erfüllung zu einem Ende der entsprechenden Phase (0, 1, 2, 3, 4, 5, 6, 7) führt.

16. Verfahren nach einem der Ansprüche 14 bis 15, **dadurch gekennzeichnet, dass** die Kriterien Zeitkriterien umfassen.

17. Verfahren nach einem der Ansprüche 14 bis 16, **dadurch gekennzeichnet, dass** die Zeitkriterien eine oder mehrere der folgenden gemessenen oder geschätzten Zeiten berücksichtigen: Zeit bis zum Erreichen oder Verlassen einer Synchrondrehzahl, Zeit bis zum Beginn oder Ende einer Schaltungsphase, Zeit bis zum Erreichen oder Verlassen eines vorgegebenen Drucks.

18. Verfahren nach einem der Ansprüche 14 bis 17, **dadurch gekennzeichnet, dass** die Kriterien Ereigniskriterien umfassen.

19. Verfahren nach einem der Ansprüche 14 bis 18, **dadurch gekennzeichnet, dass** die Ereigniskriterien eine oder mehrere der folgenden Größen und/oder deren zeitliche Ableitungen berücksichtigen: Motordrehzahl, Übersetzungsverhältnis, Synchrondrehzahlen, Schubkräfte, Beschleunigungsmomente, Gaspedalstellung, Turbinendrehzahl, Abtriebsdrehzahl.

20. Verfahren nach einem der Ansprüche 14 bis 19, **dadurch gekennzeichnet, dass** die Daten Ansteuerungsdaten für Stellglieder umfassen, die durch Druckreglerventile und/oder Magnetventile und/oder Schrittmotoren und/oder Verbrennungsmotor-Steuerungsmittel gebildet sind.

21. Verfahren nach einem der Ansprüche 14 bis 20, **dadurch gekennzeichnet, dass** zumindest einigen der Phasen (0, 1, 2, 3, 4, 5, 6, 7) und/oder einigen der Kriterien über die Daten wenigstens eine. Folgephase zugeordnet ist, die beim Ende der Phase (0, 1, 2, 3, 4, 5, 6, 7) beziehungsweise bei der Erfüllung eines Kriteriums durchlaufen wird.

22. Verfahren nach einem der Ansprüche 14 bis 21, **dadurch gekennzeichnet, dass** die Daten zumindest an verschiedenen Getriebearten, Getriebetypen und Getriebebaureihen anpassbar sind.

23. Verfahren nach einem der Ansprüche 14 bis 22, **dadurch gekennzeichnet, dass** Zustandsgrößen erfasst werden, und dass an Hand dieser Zustandsgrößen eine Schaltstrategie ausgewählt wird, der vorherbestimmte Phasen zugeordnet sind.

24. Verfahren nach einem der Ansprüche 14 bis 23, **dadurch gekennzeichnet, dass** die Zustandsgrößen den aktuellen Gang und/oder den Zielgang und/oder die Fahrzeuggeschwindigkeit und/oder das Motormoment umfassen.

25. Verfahren nach einem der Ansprüche 14 bis 24, **dadurch gekennzeichnet, dass** die Schaltstrategien ohne Veränderung des Programms über die Daten konfiguriert werden.

26. Verfahren nach einem der Ansprüche 14 bis 25, **dadurch gekennzeichnet, dass** die Daten die Zuordnungen von Phasen (0, 1, 2, 3, 4, 5, 6, 7) zu Schaltstrategien definieren.

## Claims

1. Shift process control for coordinating shifts which correspond to the change in configurations in a gearbox, a change in the configurations resulting in an alteration in the power transmission of the gearbox, and the process of shifts, which comprises the actuation of a multiplicity of actuating elements, taking place in under the control of a program and being divided into phases (0, 1, 2, 3, 4, 5, 6, 7), each of which is assigned at least one actuation mode for at least one actuating element, at least some of the phases being assigned at least one criterion, the fulfilment of which leads to a conclusion of the respective phase, **characterized in that** the phases (0, 1, 2, 3, 4, 5, 6, 7) can be configured, without altering the program, by assigning a criterion or a plurality of criteria to a phase.

2. Shift process control according to one of the preceding claims, **characterized in that** the criteria comprise time criteria.

3. Shift process control according to one of the preceding claims, **characterized in that** the time criteria take into account one or more of the following measured or estimated times: time until reaching or leaving a synchronous speed, time until the start or end of a shift phase, time until reaching or leaving a predefined pressure.

4. Shift process control according to one of the preceding claims, **characterized in that** the criteria comprise event criteria.

5. Shift process control according to one of the preceding claims, **characterized in that** the event criteria take into account one or more of the following parameters and/or their time derivatives: engine speed, transmission ratio, synchronous speeds, shear forces, moments of acceleration, accelerator pedal position, turbine speed, output speed.

6. Shift process control according to one of the preceding claims, **characterized in that** actuating elements comprise pressure regulating valves and/or solenoid valves and/or stepper motors and/or combustion engine control means.

7. Shift process control according to one of the preceding claims, **characterized in that** at least some of the phases and/or some of the criteria (0, 1, 2, 3, 4, 5, 6, 7) are assigned at least one subsequent phase (0, 1, 2, 3, 4, 5, 6, 7) which is carried out at the end of the phase (0, 1, 2, 3, 4, 5, 6, 7) or when a criterion is fulfilled.

8. Shift process control according to one of the preceding claims, **characterized in that** the configuration of the phases (0, 1, 2, 3, 4, 5, 6, 7) is carried out by means of data which define the actuation modes and/or the criteria and/or the subsequent phases in the context of available functions, and **in that** the data can be adapted at least to different forms of gearbox, types of gearbox and models of gearbox.

9. Shift process control according to one of the preceding claims, **characterized in that** state parameters are sensed, and **in that** a shift strategy is selected on the basis of these state parameters and is assigned previously determined phases (0, 1, 2, 3, 4, 5, 6, 7).

10. Shift process control according to one of the preceding claims, **characterized in that** the state parameters comprise the current gear and/or the target gear and/or the vehicle speed and/or the engine torque.

11. Shift process control according to one of the preceding claims, **characterized in that** the shift strategies can be configured without altering the program.

12. Shift process control according to one of the preceding claims, **characterized in that** the data defines the assignment of phases (0, 1, 2, 3, 4, 5, 6, 7) to shift strategies.

13. Shift process control according to one of the preceding claims, **characterized in that** at least one actuating element is an active actuating element which can request the end of a phase (0, 1, 2, 3, 4, 5, 6, 7).

14. Method for coordinating of shift processes which correspond to the change in configurations in a gearbox, a change in the configurations resulting in an alteration in the power transmission of the gearbox, and the process of shifts, which comprises the actuation of a multiplicity of actuating elements, taking place under the control of a program and being divided into phases (0, 1, 2, 3, 4, 5, 6, 7), each of which is assigned at least one actuation mode for at least one actuating element, at least some of the phases being assigned at least one criterion, the fulfilment of which leads to a conclusion of the respective phase, **characterized in that** the phases (0, 1, 2, 3, 4, 5, 6, 7) are defined by data and can be configured by means of the data, without altering the program, by assigning a criterion or a plurality of criteria to a phase.

15. Method according to Claim 14, **characterized in that** at least some of the phases (0, 1, 2, 3, 4, 5, 6, 7) are, by means of the data, assigned criteria, the fulfilment of which causes the respective phase (0, 1, 2, 3, 4, 5, 6, 7) to end.

16. Method according to one of Claims 14 to 15, **characterized in that** the criteria comprise time criteria.

17. Method according to one of Claims 14 to 16, **characterized in that** the time criteria take into account one or more of the following measured or estimated times: time until reaching or leaving a synchronous speed, time until the start or end of a shift phase, time until reaching or leaving a predefined pressure.

18. Method according to one of Claims 14 to 17, **characterized in that** the criteria comprise event criteria.

19. Method according to one of Claims 14 to 18, **characterized in that** the event criteria take into account one or more of the following parameters and/or their time derivatives: engine speed, transmission ratio, synchronous speeds, shear forces, moments of acceleration, accelerator pedal position, turbine speed, output speed.

20. Method according to one of Claims 14 to 19, **characterized in that** the data comprise actuation data items for actuating elements, which are formed by pressure regulating valves and/or solenoid valves and/or stepper motors and/or combustion engine control means.

21. Method according to one of Claims 14 to 20, **characterized in that** at least some of the phases (0, 1, 2, 3, 4, 5, 6, 7) and/or some of the criteria are, by means of the data, assigned at least one subsequent phase which is run through at the end of the phase (0, 1, 2, 3, 4, 5, 6, 7) or when a criterion is fulfilled.

22. Method according to one of Claims 14 to 21, **characterized in that** the data can be adapted at least to different forms of gearbox, types of gearbox and models of gearbox.

23. Method according to one of Claims 14 to 22, **characterized in that** state parameters are sensed, and **in that** a shift strategy is selected on the basis of these state parameters and is assigned previously determined phases.

24. Method according to one of Claims 14 to 23, **characterized in that** the state parameters comprise the current gear and/or the target gear and/or the vehicle speed and/or the engine torque.

25. Method according to one of Claims 14 to 24, **characterized in that** the shift strategies can be configured by means of the data without altering the program.

26. Method according to one of Claims 14 to 25, **characterized in that** the data defines the assignment of phases (0, 1, 2, 3, 4, 5, 6, 7) to shift strategies.

## Revendications

1. Commande de processus de changements de vitesse pour coordonner des changements de vitesse qui correspondent à des changements de constellations dans une boîte de vitesses, dans laquelle un changement des constellations provoque une variation de la transmission de force de la boîte de vitesses, et dont le processus de changements de vitesse comprenant la commande d'une multitude d'organes de réglage est commandé par un programme et divisé en phases (0, 1, 2, 3, 4, 5, 6, 7) auxquelles est associé respectivement au moins un mode de commande pour au moins un organe de réglage, avec au moins un critère associé à au moins quelques phases dont la réalisation entraîne une fin de la phase concernée,
**caractérisée en ce que**
les phases (0, 1, 2, 3, 4, 5, 6, 7) peuvent être configurées sans modification du programme en associant un ou plusieurs critères à une phase.

2. Commande de processus de changements de vitesse selon l'une quelconque des revendications précédentes,
**caractérisée en ce que**
les critères comprennent des critères de temps.

3. Commande de processus de changements de vitesse selon l'une quelconque des revendications précédentes,
**caractérisée en ce que**
les critères de temps prennent en compte un ou plusieurs des temps mesurés ou estimés suivants : temps jusqu'à atteindre ou quitter une vitesse de rotation synchrone, temps jusqu'au début ou à la fin d'une phase de changement de vitesse, temps jusqu'à obtenir ou quitter une pression prédéterminée.

4. Commande de processus de changements de vitesse selon l'une quelconque des revendications précédentes,
**caractérisée en ce que**
les critères comprennent des critères d'événement.

5. Commande de processus de changements de vitesse selon l'une quelconque des revendications précédentes,
**caractérisée en ce que**
les critères d'événement prennent en compte une ou plusieurs des grandeurs suivantes et/ou les déductions dans le temps de celles-ci : vitesse de rotation du moteur, rapport de transmission, vitesse de rotation synchrone, efforts au cisaillement, couples d'accélération, position de la pédale d'accélérateur, vitesse de rotation de la turbine, vitesse de rotation de sortie.

6. Commande de processus de changements de vitesse selon l'une quelconque des revendications précédentes,
**caractérisée en ce que**
des organes de réglage comprennent des soupapes de régulation de la pression et/ou des électrovannes et/ou des moteurs pas à pas et/ou des moyens de commande d'un moteur à combustion.

7. Commande de processus de changements de vitesse selon l'une quelconque des revendications précédentes,
**caractérisée en ce qu'**
au moins une phase suivante (0, 1, 2, 3, 4, 5, 6, 7) qui se déroule à la fin de la phase (0, 1, 2, 3, 4, 5, 6, 7) ou lorsqu'un critère est réalisé est associée à au moins quelques phases et/ou quelques critères (0, 1, 2, 3, 4, 5, 6, 7).

8. Commande de processus de changements de vitesse selon l'une quelconque des revendications précédentes,
**caractérisée en ce que**
la configuration des phases (0, 1, 2, 3, 4, 5, 6, 7) s'effectue par des données qui définissent des modes de commande et/ou les critères et/ou les phases suivantes dans le cadre de fonctions existantes, et les données peuvent être adaptées au moins à différents sortes de boîtes de vitesses, types de boîtes de vitesses et gammes de production de boites de vitesses.

9. Commande de processus de changement de vitesse selon l'une quelconque des revendications précédentes,
**caractérisée en ce que**
des grandeurs d'état sont détectées, et une stratégie de changement de vitesse est choisie à l'aide de ces grandeurs d'état à laquelle sont associées des phases (0, 1, 2, 3, 4, 5, 6, 7) prédéterminées.

10. Commande de processus de changements de vitesse selon l'une quelconque des revendications précédentes,
**caractérisée en ce que**
les grandeurs d'état comprennent la vitesse actuelle et/ou la vitesse cible et/ou la vitesse du véhicule et/ou le couple du moteur.

11. Commande de processus de changement de vitesse selon l'une quelconque des revendications précédentes,
**caractérisée en ce que**
les stratégies de changement de vitesse sont configurables sans modification du programme.

12. Commande de processus de changements de vitesse selon l'une quelconque des revendications précédentes,
**caractérisée en ce que**
les données définissent des associations de phases (0, 1, 2, 3, 4, 5, 6, 7) à des stratégies de changement de vitesse.

13. Commande de processus de changements de vitesse selon l'une quelconque des revendications précédentes,
**caractérisée en ce qu'**
au moins un organe de réglage est un organe de réglage actif qui peut demander la fin d'une phase (0, 1, 2, 3, 4, 5, 6, 7).

14. Procédé de coordination de processus de changements de vitesse qui correspondent à des changements de constellations dans une boîte de vitesses, dans laquelle un changement des constellations provoque une variation de la transmission de force de la boîte de vitesses, et dont le processus de changements de vitesse comprenant la commande d'une multitude d'organes de réglage est commandé par un programme et divisé en phases (0, 1, 2, 3, 4, 5, 6, 7) auxquelles est associé respectivement au moins un mode de commande pour au moins un organe de réglage, avec au moins un critère associé à au moins quelques phases dont la réalisation entraîne une fin de la phase concernée,
**caractérisé en ce que**
les phases (0, 1, 2, 3, 4, 5, 6, 7) sont définies par des données et peuvent être configurées par les données sans modification du programme en associant un ou plusieurs critères à une phase.

15. Procédé selon la revendication 14,
**caractérisé en ce que**
par les données on associe à au moins quelques phases (0, 1, 2, 3, 4, 5, 6, 7), des critères dont la réalisation entraîne une fin de la phase (0, 1,
2, 3, 4, 5, 6, 7) correspondante.

16. Procédé selon l'une quelconque des revendications 14 à 15,
**caractérisée en ce que**
les critères comprennent des critères de temps.

17. Procédé selon l'une quelconque des revendications précédentes,
**caractérisé en ce que**
les critères de temps prennent en compte un ou plusieurs des temps mesurés ou estimés suivants : temps jusqu'à atteindre ou quitter une vitesse de rotation synchrone, temps jusqu'au début ou à la fin d'une phase de changement de vitesse, temps jusqu'à obtenir ou quitter une pression prédéterminée.

18. Procédé selon l'une quelconque des revendications 14 à 17,
**caractérisé en ce que**
les critères comprennent des critères d'événement.

19. Procédé selon l'une quelconque des revendications 14 à 18,
**caractérisé en ce que**
les critères d'événement prennent en compte une ou plusieurs des grandeurs suivantes et/ou les déductions dans le temps de celles-ci : vitesse de rotation du moteur, rapport de transmission, vitesse de rotation synchrone, efforts au cisaillement, couples d'accélération, position de la pédale d'accélérateur, vitesse de rotation de la turbine, vitesse de rotation de sortie.

20. Procédé selon l'une quelconque des revendications 14 à 19,
**caractérisé en ce que**
les données comprennent des données de commande pour des organes de réglage qui sont des soupapes de régulation de la pression et/ ou des électrovannes et/ou des moteurs pas à pas et/ou des moyens de commande d'un moteur à combustion.

21. Procédé selon l'une quelconque des revendications 14 à 20,
**caractérisé en ce qu'**
on associe par les données à au moins quelques phases (0, 1, 2, 3, 4, 5, 6, 7) et/ou à quelques critères, au moins une phase suivante qui se déroule à la fin de la phase (0, 1, 2, 3, 4, 5, 6, 7) ou lorsqu'un critère est réalisé.

22. Procédé selon l'une quelconque des revendications 14 à 21,
**caractérisée en ce que**
les données peuvent être adaptées au moins à différents sortes de boîtes de vitesses, types de boîtes de vitesses et gammes de production de boîtes de vitesses.

23. Procédé selon l'une quelconque des revendications 14 à 22,
**caractérisé en ce qu'**
on détecte des grandeurs d'état et on choisit une stratégie de changement de vitesse à l'aide de ces grandeurs d'état à laquelle sont associées des phases prédéterminées.

24. Procédé selon l'une quelconque des revendications 14 à 23,
**caractérisé en ce que**
les grandeurs d'état comprennent la vitesse actuelle et/ou la vitesse cible et/ou la vitesse du véhicule et/ou le couple du moteur.

25. Procédé selon l'une quelconque des revendications 14 à 24,
**caractérisé en ce que**
les stratégies de changement de vitesse sont configurées par les données sans modification du programme.

26. Procédé selon l'une quelconque des revendications 14 à 25,
**caractérisé en ce que**
les données définissent des associations de phases (0, 1, 2, 3, 4, 5, 6, 7) à des stratégies de changement de vitesse.
